# EUROPÄISCHE PATENTSCHRIFT

(11) **EP 1 711 571 B1**
(45) Veröffentlichungstag und Bekanntmachung des Hinweises auf die Patenterteilung: **30.07.2008**
(21) Anmeldenummer: 05706729.0
(22) Anmeldetag: 01.02.2005
(51) Int. Cl.: C09J 7/02, C09J 7/00

(54) **TRENNSCHICHTTRÄGER**
SEPARATING LAYER CARRIER
SUPPORT DE COUCHE DE SEPARATION

(30) Priorität: 06.02.2004 DE 202004001802 U; 22.07.2004 DE 102004035697
(43) Veröffentlichungstag der Anmeldung: 18.10.2006
(73) Patentinhaber: 3M Innovative Properties Company, St. Paul MN 55133-3427 (US)
(72) Erfinder: Ludwig, Peter, 83064 Raubling (DE)
(74) Vertreter: Vossius & Partner
(86) Internationale Anmeldenummer: PCT/DE2005/000149
(87) Internationale Veröffentlichungsnummer: WO 2005/075593

(56) Entgegenhaltungen:
- US-A- 5 362 516
- US-B1- 6 197 397

## Beschreibung

Die Erfindung betrifft einen Trennschichtträger mit einem flächigen Substrat und einer darauf aufgebrachten Trennschicht. Der Trennschichtträger ist geeignet, Selbsthaftklebematerial mit einer Schicht Haftkleber zu hinterlegen. Er weist eine Reliefstruktur mit erhabenen Stegen auf, die in der Schicht Haftkleber im wesentlichen komplementäre Kanäle bilden, die beim Aufkleben eingesperrte Luft entweichen lassen.

Selbsthaftklebematerialien sind aus der Praxis vielfältig bekannt. Sie haben üblicherweise eine Ansichtsseite, die durchsichtig, durchscheinend, undurchsichtig (opak), ein- oder mehrfarbig sein und/oder eine beliebige Information tragen kann, und eine Schicht Haftkleber an der Rückseite. Der Haftkleber ist vor dem Aufkleben mit einem Trennschichtträger (Release Liner) abgedeckt. Zum Aufkleben wird der Trennschichtträger abgezogen und das Selbsthaftklebematerial mit der Haftkleberschicht an einem zu beklebenden Untergrund festgesetzt.

Speziell bei großflächigen, luftundurchlässigen Selbsthaftklebematerialien z. B. mit einer Kunststoff-Folie an oder hinter der Ansichtsseite entsteht dadurch ein Problem, daß beim Aufkleben Luft eingesperrt wird, die Blasen bildet und einen vollflächigen Klebekontakt mit dem Untergrund verhindert. Das äußere Erscheinungsbild flexibler Selbsthaftklebematerialien kann durch die Luftblasen oder unerwünschte Löcher und/oder Falten beeinträchtigt werden, die bei dem Versuch entstehen, die Luftblasen auszubügeln.

Zur Vermeidung von Luftblasen beim Aufkleben ist es bekannt, dem Trennschichtträger (Release Liner) eines Selbsthaftklebematerials eine Reliefstruktur mit erhabenen Stegen zu verleihen, die nach dem Abziehen des Trennschichtträgers in der Haftkleberschicht zumindest temporär Kanäle hinterlassen, durch die eingesperrte Luft entweichen kann.

Bei der EP 0 951 518 B1 wird zu diesem Zweck ein Trennschichtträger aus mit Polyethylen beschichtetem Papier und einer Silikontrennschicht in einem zusätzlichen Arbeitsgang geprägt (vgl. EP 0 951 518 B1 Beispiele 43 bis 49).

Aufgabe der Erfindung ist es, die Herstellung eines Trennschichtträgers der eingangs genannten Art mit einer Reliefstruktur unaufwendiger zu gestalten.

Bei dem diese Aufgabe lösenden Trennschichtträger ist die Reliefstruktur wenigstens zum Teil von einem Aufdruck auf das Substrat gebildet.

Bei einer bevorzugten Ausführungsform besteht das Substrat aus Papier, insbesondere gestrichenem Papier. Die Reliefstruktur des Substrats ist ganz oder zum Teil durch einen Aufdruck auf den Strich des Papiers gebildet.

Die Bedruckbarkeit und Silikonisierfähigkeit von Papier durch Streichen zu verbessern, ist allgemein bekannt. Auch gibt es einen umfangreichen Stand der Technik zum Drucken von Reliefstrukturen beispielsweise für Blindenschrift oder dekorative Zwecke (z. B. Tapeten, Trennpapiere für die Herstellung von Kunstleder). Die verwendeten Druckfarben sind teils thermisch aufblähend, teils hochviskos und schnell UVvernetzend. Für die Erfindung gibt dieser Stand der Technik nicht viel her. Zum einen sind die herkömmlicherweise aufgedruckten Reliefstrukturen sehr grob, und zum anderen die verwendeten Druckfarben mit der auf das Substrat aufzubringenden Trennschicht allenfalls bedingt kompatibel. Für die Trennschicht kommen spezielle Silikonsysteme zum Einsatz, die thermisch oder strahlungsvernetzend sein können, als Emulsion oder Lösung mit verschiedenen Lösungsmitteln oder als lösungsmittelfreies Festsilikon aufgebracht werden und in ihrer Trennwirkung durch Fremdchemikalien nur zu leicht inhibiert werden, speziell im Sinn einer unerwünscht verminderten chemischen Vernetzung und Haftung des Silikons ("smear", "rub-off", "peel-off"). Zu berücksichtigen sind dabei thermische Einflüsse und Langzeiteffekte. Die Realisierung einer auf gestrichenes Papier aufgedruckten Reliefstruktur für die Zwecke der vorliegenden Erfindung bedurfte der umfangreichen Forschung nach silikonverträglichen Druckfarben und geeigneten Drucktechniken.

Bei alternativ bevorzugten Ausführungsformen besteht das Substrat aus mit Kunststoff beschichtetem Papier, Kunstoff-Folie oder mit Kunststoff beschichteter Kunststoff-Folie. Das Substrat kann mit der Kunststoffbeschichtung dispersionsbeschichtet, laminiert oder extrusionsbeschichtet sein. Die Reliefstruktur wird von einem Aufdruck auf den Kunststoff gebildet.

Bei einer weiteren Ausführungsform ist das aus Papier oder Kunststoff-Folie bestehende Substrat des Trennschichtträgers mit der Trennschicht bedruckt, um diese vollflächig und mit der erfindungsgemäßen Reliefstruktur auf das Substrat aufzubringen. Die Drucktechnik ermöglicht es, die Trennschicht entsprechend zu strukturieren. Druckmaterial sind modifizierte Silikonsysteme oder mit Silikon modifizierte Druckfarben.

Nach alledem kann man einerseits die Reliefstruktur auf das Substrat des Trennschichtträgers aufdrucken und das Substrat in herkömmlicher Weise homogen silikonisieren und andererseits eine Trennschicht mit der Reliefstruktur auf ein homogenes Substrat aufdrucken.

Bei einer bevorzugten Ausführungsform hat die Reliefstruktur des erfindungsgemäßen Trennschichtträgers Stege mit einer Breite von 50 µm bis 200 µm und einer Höhe von 5 µm bis 40 µm.

Bei einer bevorzugten Ausführungsform ist die Reliefstruktur eine regelmäßige Polygonstruktur mit vier- bis achteckigen Polygonen, insbesondere Rauten (Rhomben) oder regelmäßigen Sechsecken.

Bei einer bevorzugten Ausführungsform ist die Reliefstruktur eine unregelmäßige Polygonstruktur mit stochastisch geformten und verteilten, eckverbundenen, vier- bis siebeneckigen Polygonen.

Bei einer bevorzugten Ausführungsform nimmt ein jedes Polygon eine Fläche von 0,5 mm² bis 3 mm² ein.

Gegenstand der Erfindung sind gleichermaßen die vorerwähnten Trennschichtträger (Release Liner) und damit hinterlegte Selbsthaftklebematerialien.

Die Erfindung wird im folgenden anhand von in der Zeichnung dargestellten Ausführungsbeispielen näher erläutert. Es zeigen:
- Fig. 1: die schematische Seitenansicht eines Trennschichtträgers mit einem Substrat aus gestrichenem Papier, einer darauf aufgedruckten erhabenen Reliefstruktur und einer Trennschicht darüber;
- Fig. 2: die schematische Seitenansicht eines Selbsthaftklebematerials mit dem Trennschichtträger gemäß Fig. 1;
- Fig. 3: die schematische Seitenansicht eines Trennschichtträgers mit einem Substrat aus gestrichenem Papier und einer darauf aufgedruckten Trennschicht, die eine Reliefstruktur aufweist;
- Fig. 4: bis Fig. 6 in Draufsicht verschiedene Reliefstrukturen, von denen die in

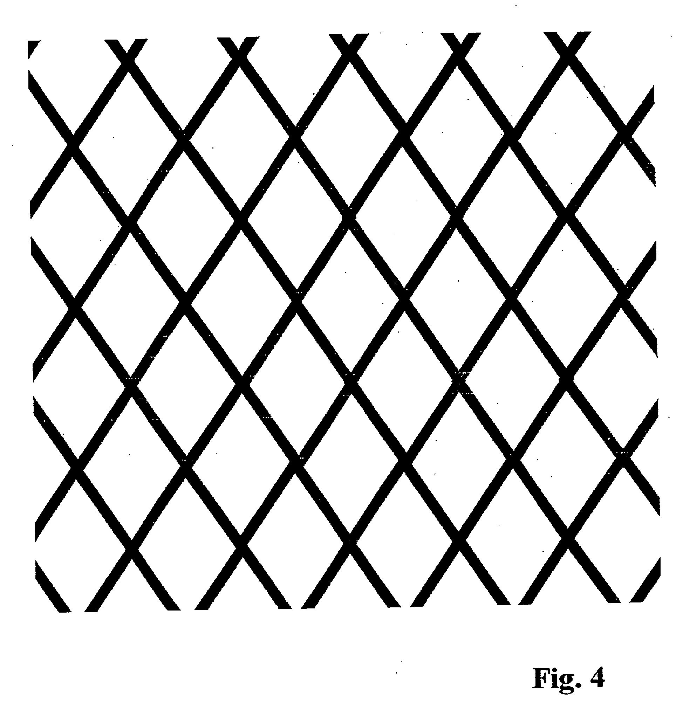

- Fig. 4: regelmäßig-rhombisch, in

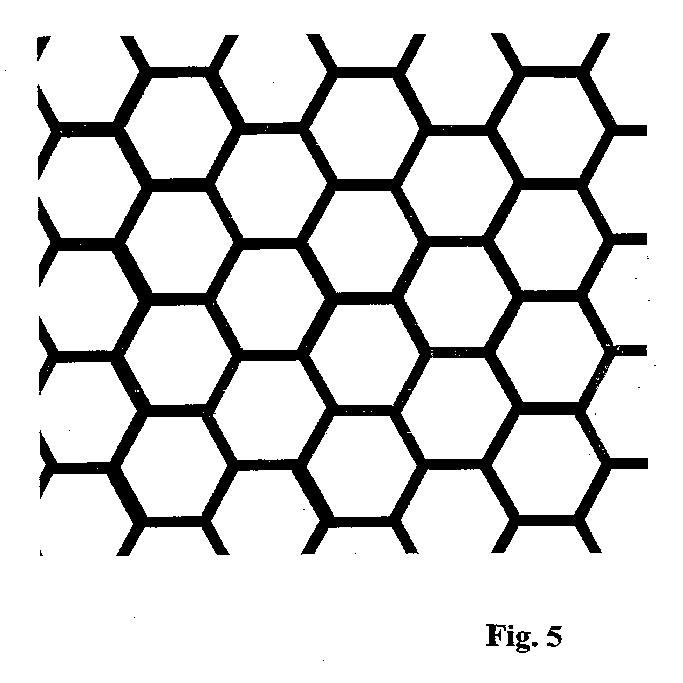

- Fig. 5: regelmäßig-sechseckig, und in
- Fig. 5: unregelmäßig-polygonal mit stochastisch variierender Form und Verteilung eckverbundener Polygone ist, die vier bis sieben Ecken haben.

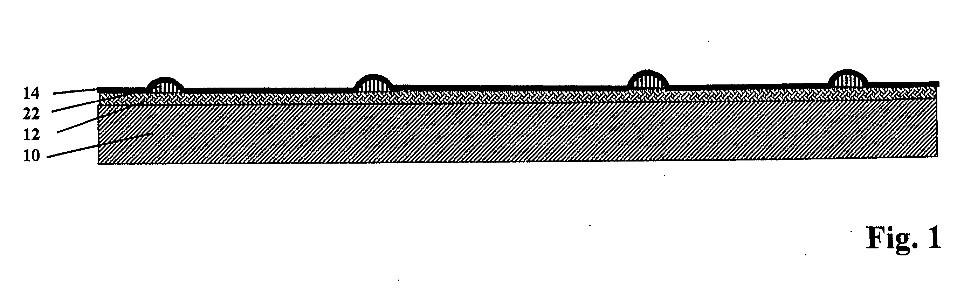

Der in Fig. 1 gezeigte Trennschichtträger hat ein flächiges Substrat 10 aus gestrichenem Papier, auf dessen ebenen, vollflächigen Strich 12 eine Reliefstruktur 22 aufgedruckt ist. Darüber liegt vollflächig eine Trennschicht 14 aus Silikon.

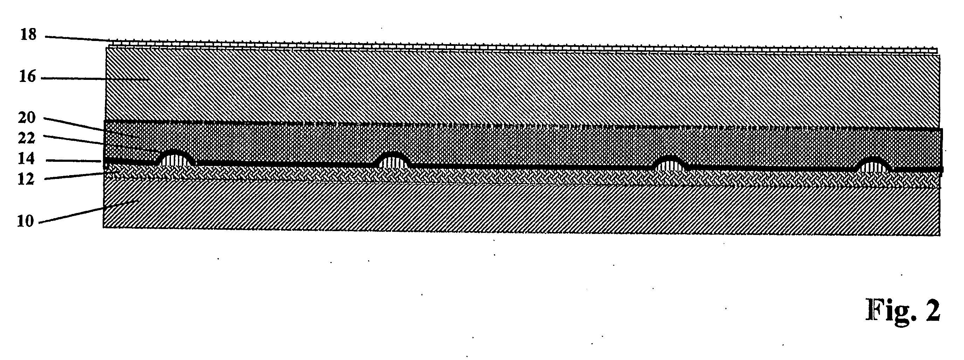

Fig. 2 zeigt ein Selbsthaftklebematerial, bei dem ein Druckträger 16 mit einem ansichtsseitigen Aufdruck 18 an der Rückseite mit Haftkleber beschichtet und die Schicht 20 Haftkleber mit dem erwähnten Trennschichtträger hinterlegt ist.

Fig. 1 und Fig. 2 repräsentieren genauso einen Trennschichtträger, der ein flächiges Substrat 10 aus Papier oder Kunststoff-Folie hat. Das Substrat ist mit einer ebenen, vollflächigen Kunststoffschicht 12 dispersionsbeschichtet, laminiert oder extrusionsbeschichtet. Auf die Kunststoffschicht 12 ist eine Reliefstruktur 22 aufgedruckt.

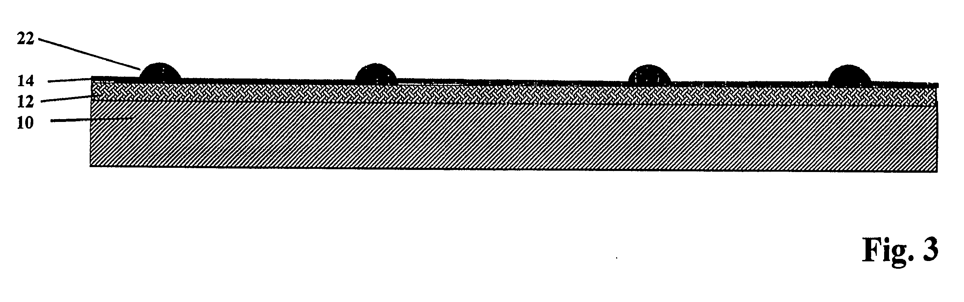

Der in Fig. 3 gezeigte Trennschichtträger hat ein flächiges Substrat 10 aus gestrichenem Papier, auf dessen ebenen, vollflächigen Strich 12 eine Trennschicht 14 aus Silikon aufgedruckt ist, die eine Reliefstruktur 22 hat.

Fig. 3 repräsentiert genauso einen Trennschichtträger, der ein flächiges Substrat 10 aus Papier oder Kunststoff-Folie hat. Das Substrat 10 ist mit einer ebenen, vollflächigen Kunststoffschicht 12 dispersionsbeschichtet, laminiert oder extrusionsbeschichtet. Auf die Kunststoffschicht 12 ist eine Trennschicht 14 aus Silikon aufgedruckt, die eine Reliefstruktur 22 hat.

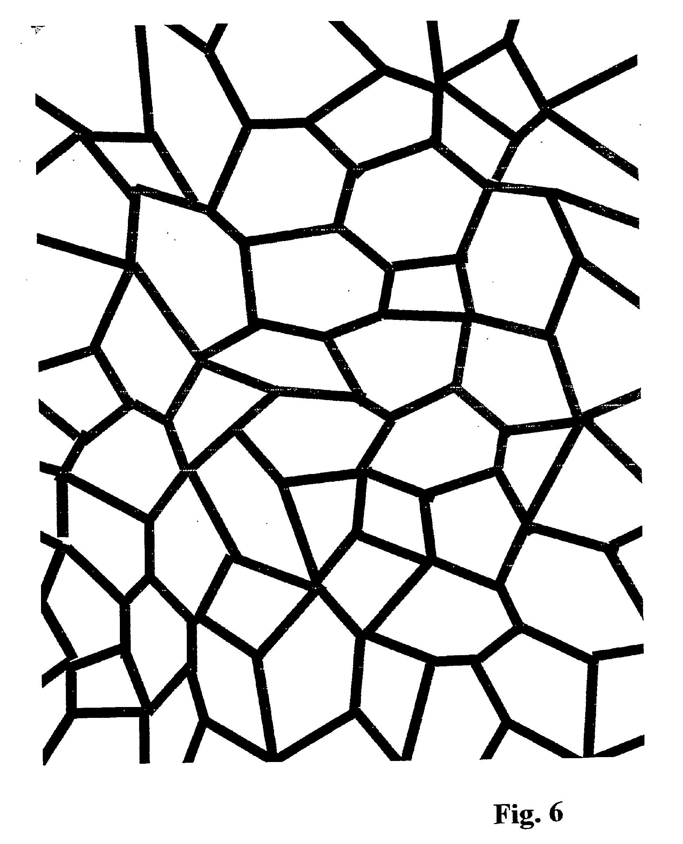

Fig. 4 bis Fig. 6 zeigen verschiedene Reliefstrukturen.

### Liste der Bezugszeichen

- 10: Substrat
- 12: Strich bzw. Kunststoffbeschichtung
- 14: Trennschicht
- 16: Druckträger
- 18: Aufdruck
- 20: Schicht Haftkleber
- 22: Reliefstruktur

## Patentansprüche

1. Trennschichtträger mit einem flächigen Substrat (10) und einer darauf aufgebrachten Trennschicht (14), der ein Selbsthaftklebematerial mit einer Schicht Haftkleber (20) zu hinterlegen geeignet ist und eine Reliefstruktur (22) mit erhabenen Stegen aufweist, die in der Schicht Haftkleber (20) im wesentlichen komplementäre Kanäle bilden, die beim Aufkleben eingesperrte Luft entweichen lassen, **dadurch gekennzeichnet, daß** die Reliefstruktur (22) wenigstens zum Teil von einem Aufdruck auf das Substrat (10) gebildet ist.

2. Trennschichtträger nach Anspruch 1, **dadurch gekennzeichnet, daß** das Substrat (10) aus Papier besteht.

3. Trennschichtträger nach Anspruch 2, **dadurch gekennzeichnet, daß** das Substrat (10) aus gestrichenem Papier besteht.

4. Trennschichtträger nach Anspruch 2, **dadurch gekennzeichnet, daß** das Substrat (10) aus mit Kunststoff beschichtetem Papier besteht.

5. Trennschichtträger nach Anspruch 1, **dadurch gekennzeichnet, daß** das Substrat (10) aus Kunststoff-Folie besteht.

6. Trennschichtträger nach Anspruch 5, **dadurch gekennzeichnet, daß** das Substrat (10) aus mit Kunststoff beschichteter Kunststoff-Folie besteht.

7. Trennschichtträger nach einem der Ansprüche 1 bis 6, **dadurch gekennzeichnet, daß** eine vollflächige Trennschicht (14) mit der Reliefstruktur (22) auf das Substrat (10) aufgedruckt ist.

8. Trennschichtträger nach einem der Ansprüche 1 bis 7, **dadurch gekennzeichnet, daß** die Reliefstruktur (22) eine regelmäßige Polygonstruktur mit vier- bis achteckigen Polygonen, insbesondere Rauten oder regelmäßigen Sechsecken, ist.

9. Trennschichtträger nach einem der Ansprüche 1 bis 7, **dadurch gekennzeichnet, daß** die Reliefstruktur (22) eine unregelmäßige Polygonstruktur mit stochastisch geformten und verteilten, eckverbundenen, vier- bis siebeneckigen Polygonen ist.

10. Trennschichtträger nach einem der Ansprüche 1 bis 9, **dadurch gekennzeichnet, daß** die Reliefstruktur (22) Stege mit einer Breite von 50 µm bis 200 µm und einer Höhe von 5 µm bis 40 µm hat.

11. Trennschichtträger nach einem der Ansprüche 8 bis 10, **dadurch gekennzeichnet, daß** ein jedes Polygon eine Fläche von 0,5 mm² bis 3 mm² einnimmt.

12. Selbsthaftklebematerial mit einem Trennschichtträger nach einem der Ansprüche 1 bis 11.

## Claims

1. Release liner comprising a laminar substrate (10) and a release layer (14) applied thereon, which is suitable for depositing a self-adhesive material provided with a layer of pressure-sensitive adhesive (20) and comprises a relief structure (22) with raised lands forming substantially complementary channels in the layer of pressure-sensitive adhesive(20), through which air trapped during adhesion can escape, **characterized in that** the relief structure (22) is formed at least in part by an imprint on the substrate (10).

2. Release liner according to Claim 1, **characterized in that** the substrate (10) comprises paper.

3. Release liner according to Claim 2, **characterized in that** the substrate (10) comprises coated paper.

4. Release liner according to Claim 2, **characterized in that** the substrate (10) comprises paper coated with plastic.

5. Release layer according to Claim 1, **characterized in that** the substrate (10) comprises plastic film.

6. Release liner according to Claim 5, **characterized in that** the substrate (10) comprises plastic film coated with plastic.

7. Release liner according to any one of Claims 1 to 6, **characterized in that** a coextensive release layer (14) with the relief structure (22) is imprinted on the substrate (10).

8. Release liner according to any one of Claims 1 to 7, **characterized in that** the relief structure (22) is a regular polygonal structure comprising polygons having four to eight corners, in particular rhombuses or regular hexagons.

9. Release liner according to any one of Claims 1 to 7, **characterized in that** the relief structure (22) is an irregular polygonal structure comprising stochastically shaped and distributed, corner-joined polygons having four to seven corners.

10. Release liner according to any one of Claims 1 to 9, **characterized in that** the relief structure (22) has lands having a width of from 50 µm to 200 µm and a height of from 5 µm to 40 µm.

11. Release liner according to any one of Claims 8 to 10, **characterized in that** each polygon covers an area of from 0.5 mm² to 3 mm².

12. Self-adhesive material comprising a release liner according to any one of Claims 1 to 11.

## Revendications

1. Support de couche de séparation comprenant un substrat plat (10) et une couche de séparation (14) déposée sur celui-ci, qui convient pour appliquer une matière adhésive autocollante avec une couche de colle adhésive (20) et qui présente une structure en relief (22) avec des nervures surélevées, qui forment dans la couche de colle adhésive (20) des canaux essentiellement complémentaires, qui laissent échapper l'air emprisonné lors du collage, **caractérisé en ce que** la structure en relief (22) est formée au moins en partie par une empreinte sur le substrat (10).

2. Support de couche de séparation selon la revendication 1, **caractérisé en ce que** le substrat (10) est constitué de papier.

3. Support de couche de séparation selon la revendication 2, **caractérisé en ce que** le substrat (10) est constitué de papier couché.

4. Support de couche de séparation selon la revendication 2, **caractérisé en ce que** le substrat (10) est constitué de papier revêtu de matière synthétique.

5. Support de couche de séparation selon la revendication 1, **caractérisé en ce que** le substrat (10) est constitué d'une feuille de matière synthétique.

6. Support de couche de séparation selon la revendication 5, **caractérisé en ce que** le substrat (10) est constitué d'une feuille de matière synthétique revêtue de matière synthétique.

7. Support de couche de séparation selon l'une quelconque des revendications 1 à 6, **caractérisé en ce qu'**une couche de séparation de pleine surface (14) avec la structure en relief (22) est pressée sur le substrat (10).

8. Support de couche de séparation selon l'une quelconque des revendications 1 à 7, **caractérisé en ce que** la structure en relief (22) est une structure polygonale régulière avec des polygones quadrangulaires à octogonaux, en particulier des losanges ou des hexagones réguliers.

9. Support de couche de séparation selon l'une quelconque des revendications 1 à 7, **caractérisé en ce que** la structure en relief (22) est une structure polygonale irrégulière avec des polygones quadrangulaires à heptagonaux reliés par les sommets, formés et répartis de façon aléatoire.

10. Support de couche de séparation selon l'une quelconque des revendications 1 à 9, **caractérisé en ce que** la structure en relief (22) comporte des nervures présentant une largeur de 50 µmà 200 µm et une hauteur de 5 µm à 40 µm.

11. Support de couche de séparation selon l'une quelconque des revendications 8 à 10, **caractérisé en ce que** chaque polygone occupe une surface de 0,5 mm² à 3 mm².

12. Matière adhésive autocollante avec un support de couche de séparation selon l'une quelconque des revendications 1 à 11.
